# EUROPEAN PATENT APPLICATION

(11) **EP 1 550 973 A1**
(43) Date of publication of application: **06.07.2005**
(21) Application number: 04258085.2
(22) Date of filing: 23.12.2004
(51) Int. Cl.: G06F 17/60

(54) **Graphical representation, storage and dissemination of displayed thinking**

(30) Priority: 29.12.2003 US 747389
(71) Applicant: ETHICON ENDO-SURGERY, INC., Cincinnati, Ohio 45242 (US)
(72) Inventor: Ortiz, Mark S., Milford Ohio 45150 (US); Ware, Patrick W., Loveland Ohio 45140 (US)
(74) Representative: Tunstall, Christopher Stephen

(57) **Abstract**

Creative thinking techniques for individual or collaborative problem solving and innovation are facilitated by an automated approach to representing displayed thinking, a category note taking built upon card story boarding. Efficient card creation, placement, annotation, and presentation upon a virtual board assists a facilitator in a displayed thinking session, as well as enabling participation by remote participants and capturing session results for later reference or revision.

## Description

### Field of the Invention

The present invention relates, in general, to devices that facilitate and graphically creative and cognitive activities associated with planning and brainstorming, and more particularly to a computer-assisted approach to storyboard card generation, annotation, and association.

### Background of the Invention

With advancements in many areas of endeavor, increasingly teams having individuals with diverse skill sets are brought together to identify and solve problems in collaboration. Companies and consulting firms have proliferated tools to enhance the effectiveness of such efforts, which may be as simple as linear note taking and outlining to at least memorializing the verbally expressed suggestions from the team. As another example, tools specific to analyzing a problem include a fishbone diagram, "mind mapping".

One particularly successful technique to enhance the generation and refinement of ideas in these sessions is category note taking, wherein a number of heading and subject cards are placed, annotated and associated with one another upon a two-dimensional space. Card Story Boards supposedly originated with laying out animated cartoon production, but has been significantly modified as an 'idea' organizing method using tree logic, and is hereinafter referred to as Displayed Thinking. This approach differs in presentation to other graphical tree logic approaches, such as "Mind-Mapping", Venn diagrams, etc. With Displayed Thinking, a team facilitator is better able to concentrate on idea-generation of particular topics and sub-topics than is usually possible in other open-ended methods.

In manually performing Displayed Thinking, adhesive notes or index cards are laid out in a tabular format with a simple row of header cards, or possibly header and sub-header cards, each with a column of idea cards below it, perhaps with added action or comment notes attached. Using different shaped or colored header cards to make them more striking is helpful. Preferably, the cards are easily detached from the display surface for repositioning elsewhere on the surface.

The team facilitator or group leader describes a problem to the participants, who in turn suggest possible categories of solutions. These are written on cards and displayed as a row of headers. The group leader selects a particular header card and encourages participants to write ideas relating to that header on idea cards. These idea cards are displayed under the relevant header, followed by the leader posing provocative questions to prompt further idea cards under that header. This process is repeated with other headers, until there is an adequate supply of ideas. If necessary, the group leader returns to generating further headers, and/or adding sub-header cards under a particular header card.

Typically, the idea cards are then ranked via a suitable voting method and arranged in priority order under each header (or sub-header). The best several in each category are discussed further, and ranked amongst them. Annotations, such as a string between idea cards, flags, etc., may be used to give further insight into the relation of each idea card.

While this manual technique is effective for innovating new and improved products and services, manual Displayed Thinking has significant limitations. For instance, participants should be together to view the large wall that holds the cards. Videoconferencing provides insufficient graphical resolution to read individual cards or to view their entirety.

Furthermore, making a permanent record of the manual Displayed Thinking is difficult, requiring a significant amount of time and effort to reproduce the information on a smaller scale or to render the information into another form, such as linear text outlines. Generally known card storyboard software is also too limited. At one extreme, general graphical software may be used to generate cards with desired shape, color, text and annotations. However, not being optimized for this type of card generation and editing makes this software unsuitable for use during the session. Waiting would unduly slow the process. At the other extreme, simple software optimized for producing virtual "index cards" and placing them in a two-dimensional pattern are also known. While quick and simple enough for facilitating a Displayed Thinking session, these known index card software programs do not facilitate the full power of what is currently presented during a manual Displayed Thinking session. Annotations and moving around groups of cards is generally not supported.

Consequently, a significant need exists for an automated approach to generating and editing objects during a Displayed Thinking session.

### Brief Summary of the Invention

The invention overcomes the above-noted and other deficiencies of the prior art by providing an automated approach to representing displayed thinking, a category note taking built upon card story boarding. Efficient card creation, placement, annotation, and presentation upon a virtual board assists a facilitator in a displayed thinking session, as well as enabling participation by remote participants and capturing session results for later reference or revision. Thereby, a useful creative thinking technique is realized for individual or collaborative problem solving and innovation.

In one aspect of the invention, a system, method, and program product of representing displayed thinking upon a virtual board includes creating a card for a virtual board. In response to a user indication of a header card creation, the created card is placed into a header space. Further, in response to a user indication, the created card is designated as a subject card associated with the header card. Thereby, storyboarding of a displayed thinking session is rapidly facilitated to capture the suggestions from participants.

These and other objects and advantages of the present invention shall be made apparent from the accompanying drawings and the description thereof.

### Brief Description of the Figures

The accompanying drawings, which are incorporated in and constitute a part of this specification, illustrate embodiments of the invention, and, together with the general description of the invention given above, and the detailed description of the embodiments given below, serve to explain the principles of the present invention.
FIGURE 1 is a diagram of a displayed thinking application hosted on an enterprise network system.
FIGURE 2 is a depiction of a graphical user interface of the displayed thinking application of FIG. 1.
FIGURE 3 is a flow diagram of a sequence of operations or procedure for representation of displayed thinking, which is performed by the displayed thinking application of FIG. 1.
FIGURE 4 is a flow diagram of a sequence of operations or procedure referenced in FIG. 3 for card dragging and dropping onto the virtual board.
FIGURE 5 is a flow diagram of a sequence of operations or procedure for a multi-column placement of a subject card as an additional feature for the procedure of FIG. 3.
FIGURE 6 is a flow diagram of a sequence of operations or procedure for auto grid parameter selection as an additional feature for the procedure of FIG. 3.

### Detailed Description of the Invention

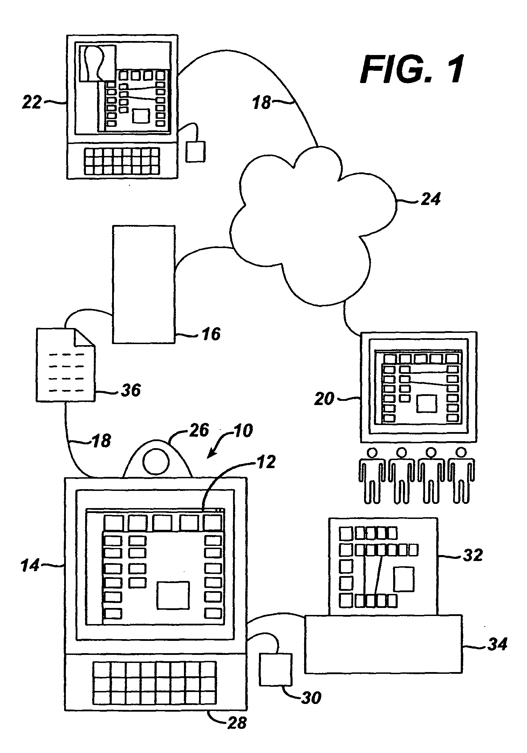

Turning to the Drawings, wherein like numerals denote like components throughout the several views, in FIG. 1, a displayed thinking application 10 facilitates creative thinking via a graphical user interface (GUI) 12 hosted on a facilitator computer 14 (e.g., personal computer, workstation, network computer, terminal, personal digital assistant, etc.) and/or a distributed platform, depicted as a server 16. Other participants connected to an enterprise network 18 may collaborate with the displayed thinking application 10, such as via a videoconferencing system 20 or a remote computer 22 that may be in communication via a public or private network, depicted as Internet 24. Verbal and human gestures may enhance the interaction between participants that are not co-located, as suggested by an audio/video device 26 proximate to the facilitator computer 14 that sends images and audio to the remote computer 22.

It should be appreciated that the term remote need not require geographical remoteness in that multiple computers may be in close proximity to one another. For instance, a group of participants may be working from closely situated workstations at their respective desks or in an integrated conference room environment. Further, remote may well indicate participants who are in electronic communication at a distance.

The facilitator may interact with the GUI 12 via various controls, such as voice recognition software, keyboard 28, pointing device (e.g., mouse, trackball, touch pad) 30 or other interfaces. In addition to facilitating creative thinking in an efficient manner, either individually or collaboratively, the displayed thinking application 10 may produce a graphical recording of the work product, depicted as a hardcopy print 32 on a printer 34. In addition, a data file 36 that encodes the essential data for another displayed thinking application 10 to open and revise may be transferred or stored as would be generally understood.

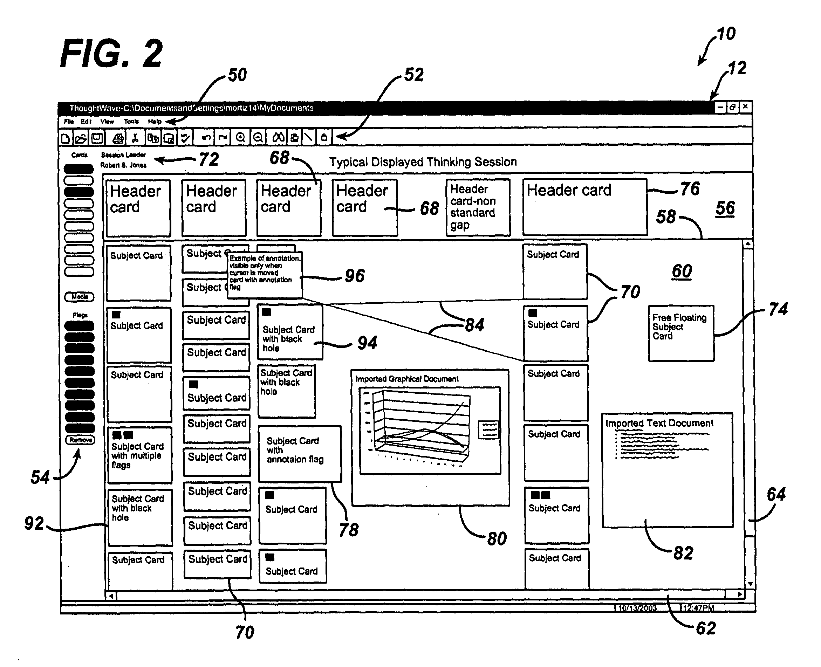

In FIG. 2, the GUI 12 of the displayed thinking application 10 is shown in greater detail, illustrating a range of features to graphically enhance knowledge capture and to provide intuitive use. The GUI 12 leverages familiarity with standard Windows-style pull-down menus 50 and toolbar icons 52 as well as a permanently displayed card annotation toolbar 54 and a header (or top) display box 56 above a splitter line 58. Below the splitter line 58, a sub-header/subject card (or bottom) display box 60 is presented. Both display boxes 56, 60 are open ended to the right with content placed to the right being accessible by rightward scrolling, such as by interacting with a horizontal scrollbar 62. The bottom box 60 is also open ended at its bottom to allow continuations of columns as desired, with the portion hidden from view being accessible by downward scrolling, such as by interacting with a vertical scrollbar 64. The display boxes 56, 60 have a grid 66, either displayed or invisible, that is used for leftwardly aligning a header card 68 or a column of cards that also includes subject cards 70.

Often, user information (e.g., name) is available to the displayed thinking application 10, either from the facilitator computer or other means such as by user input, that may be captured for graphically presenting, as at 72, and/or for embedding in a recorded data file for tracking the creation/revision history of a given session.

Individual header cards 68 and subject cards 70 may be inserted or imported in various manner, such as by double clicking a pointing device on a blank position of one of the display boxes 56, 60 or by a hot key combination and positioning a free floating card, such as at 74. A header card 68 or subject card 70 may be resized at user direction or automatically to accept a larger text input, such as depicted respectively at 76 and 78. The bottom box 60 may further accept other objects that are dragged and dropped, pasted or inserted, for instance a graphical document or chart 80 and a text document 82.

In addition to associating cards 68, 70 in columns, association lines 84 may be drawn between cards 70 to show additional relationships. Additional categorization may be introduced through selecting a card color via card color selection radio buttons 86 of the card annotation toolbar 54 and/or one or more colored flags 88 selected from flag color selection radio buttons 90 of the card annotation toolbar 54. The importance or role of an individual subject card 70 may be further denoted by added attributes such as a bolded contour 92 denoting a role of a "black hole". Other examples of annotations include little fish, big fish, whale intuitive symbols 94 that convey a level of importance, speculation, utility, or other characteristic. In order to visually consolidate more information into the presentation, some information may be hidden. For instance, a comment 96 may be entered for a subject card 70 with the comment 96 becoming selectively visible, for example by moving a cursor over the respective subject card 70.

It should be appreciated that placing subject cards 70 into columns with a respective header card 68 may advantageously expedite revisions by automatic column grouping. For instance, dragging and dropping a selected header card 68 to a new horizontal position on the top box 56 may automatically expand the required space in both the top and bottom boxes 56, 80 for the header card 68 and will cause its column of subject cards 70 to move as a group to the new position. Similarly, moving a header card 68 down into the bottom box 60 may cause a repositioning of the cards 68, 70 as required to position this new sub-heading (not shown).

It should be appreciated that a virtual board may be formed wherein the header box is not separated from the bottom box, allowing the header cards to disappear when scrolling downward.

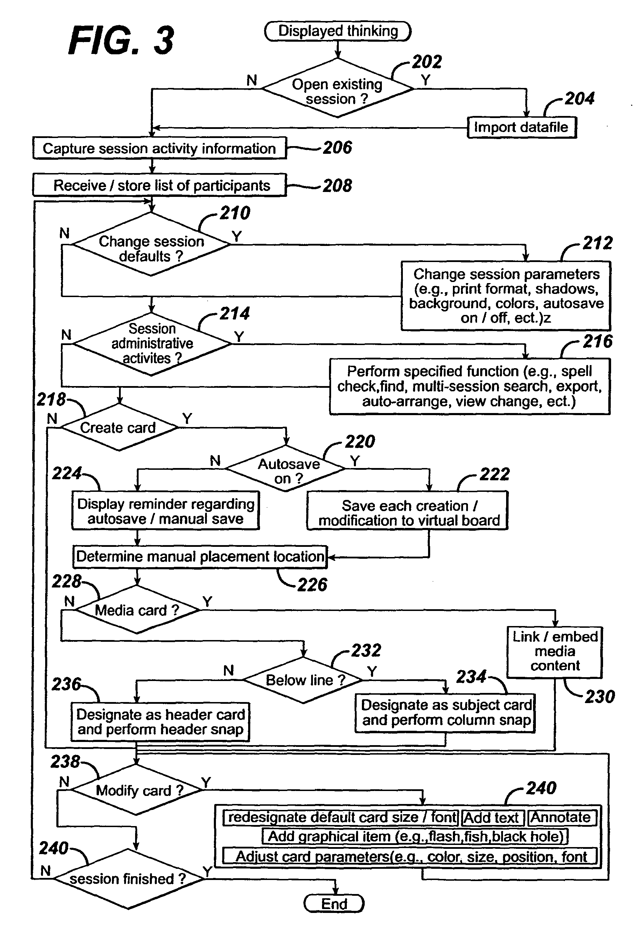

In FIG. 3, a sequence of operations or procedure 200 is depicted for presentation of displayed thinking. A new session is opened (block 202), which entails preparing an empty database and a virtual board of default size. Alternatively, the new session may entail loading a previously recorded or transmitted session for further interaction and revision. Once initialized with existing data or a default virtual board, session activity information may be automatically captured (e.g., date, time, location, business unit, session leader) (block 206), such as by accessing database information associated with an interactively logged in facilitator and participants. Alternatively or in addition, manual input session information may be received and stored, such as a list of inperson participants (block 208).

To expedite a displayed thinking representation, various defaults parameters are used so that the facilitator need not design and place each card, such as would be the case if attempting to use a general purpose graphics program. In response to a determination that the user wishes to change the system defaults (block 210), the system may display current settings and accept modifications (e.g., print format, shadows, background colors, autosave on/off, etc.) (block 212).

Various utility features may also be incorporated. If various session administrative activities are requested or enabled to be performed automatically (block 214), then such utilities are accessed (block 216), such as performing spell check on the virtual board or checking/auto correcting text as typed, finding a text string, searching for a text string through a database of stored session datafiles, exporting a session into a standard format (e.g., spreadsheet, two-dimensional picture format, wordprocessing document), auto arranging the virtual board, changing view (e.g., zoom), etc.

With the session configured, the user may then choose to add a card. If so determined in block 218, reference is made to whether autosave is set to ON (block 220), and if so, each creation or modification to the virtual board is saved (block 220), thereby preventing loss of data. If not, then a reminder may be displayed to the user to provide an opportunity to enable autosave and/or to warn against inadvertently losing content if manual save is not periodically requested (block 224).

With reference to the default card creation settings, a new card is tentatively to be placed where manually indicated by the user (block 226). A determination is made as to whether snap is inappropriate, such as if the new card is specified to be a media card (block 228). If so, its placement is not automatically positioned as a header or subject card. Instead, the media is associated with the media card by linking or embedding (block 230).

If at block 228 the card was not a media card, then a further determination is made as to whether the placement indicates a header card or subject card. This may be made in reference to a user menu selection, such as placing an empty header card to the right of existing columns or placing a subject card under a currently selected column. In the illustrative flow diagram, this determination is made with reference to whether the new card was dropped below the splitter line, or selected with a popup menu with the pointer initially below the splitter line (block 232). If below, the new card is designated as a subject card and column snap is performed as described below (block 234). Else, the new card is designated as a header card and header snap is performed as described below (block 236).

With an empty card placed in block 236, 234 or if no new card is requested for creation in block 218, a determination is made as to whether modification of a card is requested (block 238). These modifications may be performed in various manners as is common with GUIs, to include redesignating default card size/font, adding text, annotating the card, adding a graphical item (e.g., flag, big fish, little fish, black hole), adjusting card parameters for card(s) designated (e.g., color, size, position, font, word wrap, autosize box, autosize text) (block 240). These modifications of one or more cards continues until the user indicates that the session is finished (block 240). If no request to end the session is received in block 240, processing returns to block 210 to continue accepting any desired changes to session defaults (block 210), session administrative tasks (block 214), creation of new cards (block 218) and/or modification of cards (block 238).

It should be appreciated that, as part of positioning a card, the system may determine that overlaying subject cards is requested, which may be depicted as a perspective view of a stack of cards, thereby allowing visual consolidation. "Mousing over" the stack may cause the stacked cards to momentary explode for viewing. Another type of card modification includes adding hidden text to the card in order to further consolidate the depiction of the virtual board without losing the content. For instance, a footnote or hidden comment may be generally not displayed but depicted when moused over or printed in some fashion, such as end notes, when a hardcopy is prepared.

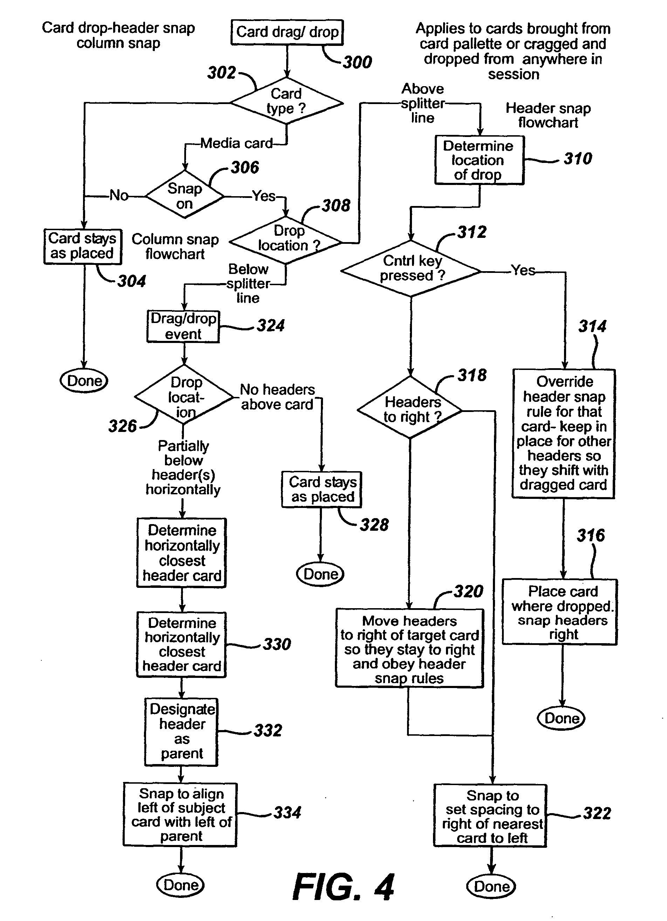

In FIG. 4, the positioning of a card that is dragged and dropped onto the virtual board is further described (block 300). If the card type is determined to be a media card (block 302), then the card stays as placed (block 304) and placement is complete. If determined not to be a media card in block 302, then a further determination is made as to whether grid snap is on (block 306). If not, then the card stays as placed (block 304). However, if grid snap is on in block 306, then the location of the drop is determined (block 308). If above the virtual board splitter line, then a header snap procedure is performed by referencing the location coordinates of the drop (block 310) and verifying whether the Control (CTRL) key was depressed (block 312). If so, then header snap is overridden for this particular card (block 314), which is then kept in place with other header cards, shifted as necessary to the right to create sufficient room (block 316). Placement of the card in this instance is then done.

If at block 312 the Control (CTRL) key was not pressed, then a determination is made as to whether a preexisting header card was already placed to the right of the current card (block 318). If so, then any preexisting header cards to the right are shifted to the right of the current (target) card, obeying grid snap rules. With any other header cards to the right handled, then the target card is left aligned (snapped) with reference to the right side of the preexisting header card to the left of the target card at a predefined spacing (block 322).

If back at block 308 the drop location was below the splitter line of the virtual board, then the procedure presumes that this is indicative of a column snap procedure being applicable. The created card is to be associated with an existing header card if substantially aligned thereto. Thus, the card being created is not a header card but rather another type of card (e.g., subject cards, sub-header cards). The drag/drop event (block 324) prompts reference to the spatial coordinates of the drop location (block 326). If no headers are present above the dropped card, then the card stays as placed ("free floating" or orphan) (block 328). However, if the created card has been dropped at least partially below one or more header cards, then the header card most nearly vertically aligned with the dropped card is determined (block 330). A parental association is then made between this header card and the dropped card (block 332) and the child dropped card is left aligned with the parent header card (block 334). Positioning is then done.

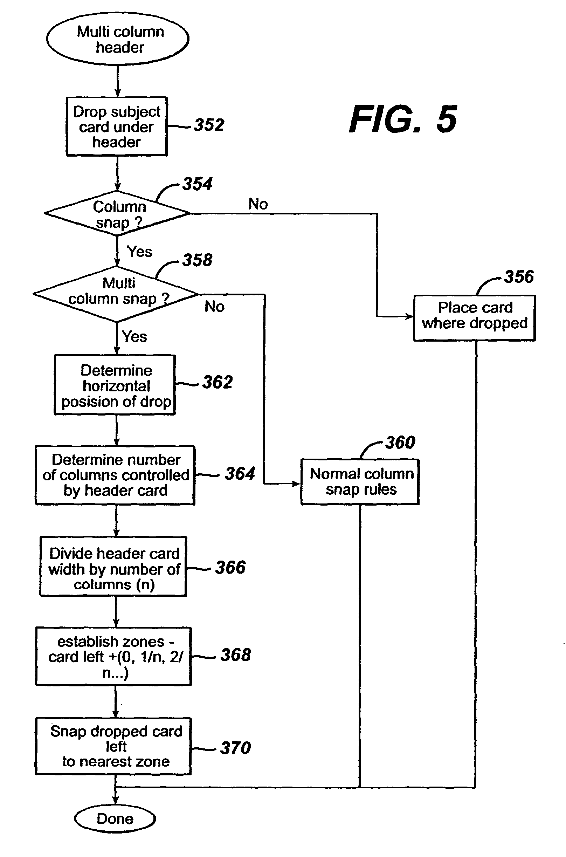

In FIG. 5, a further feature may be incorporated into column snap wherein a default setting or user initiated limit on the vertical depth of a column simplifies viewing of the virtual board. Scrolling to see hidden cards would then require only scrolling horizontally. A multi-column header feature (block 350) is initiated upon a subject card being dropped under a header card (block 352). If column snap is determined to have been disabled (block 354), then the subject card remains in the place where it was dropped (block 356) and placement is done. If column snap is enabled, then a further determination is made as to whether multi-column snap is enabled (block 358). If not, then normal column snap rules are applied as previously described (block 360) and placement is done.

It should be appreciated that multi-columns may be multi-rows in instances where header cards are vertically aligned. Moreover, a multi-stack of subject cards/subheader cards adopted by the header card may be graphically arrayed in other than a vertical column.

If multi-column snap is enabled in block 358, then a determination is made as to the horizontal position of the dropped subject card (block 362). The number of columns controlled by the header card is also determined (block 364). The width of the header card is divided by the number of columns (n) (block 366). Zones are established for aligning the subject card into one of the number of columns (block 368). Then the subject card is snap dropped left to the nearest available zone (block 370), with other subject cards shifted as necessary to provide the necessary spacing.

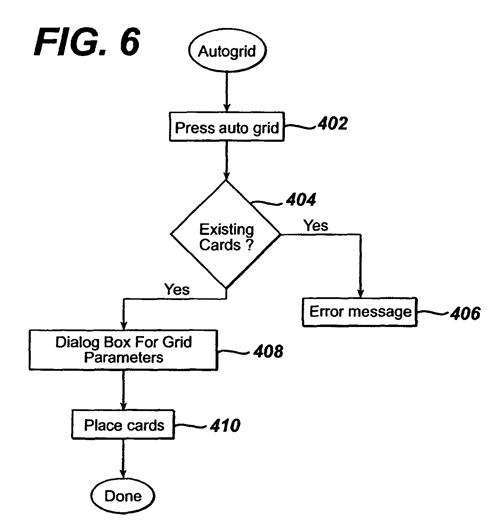

In FIG. 6, another procedure for an autogrid feature 400 is depicted that may be selected by the user (block 402). In response thereto, a determination is made as to whether any cards exist upon the virtual board (block 404), and if so, an error message is displayed (block 406). Else, a dialog box is presented for grid parameters (e.g., metric or English units, specified spacing in the selected unit, grid snap on or off, visible or invisible grid, etc.) (block 408). Afterward, the user may place cards (block 410) that are than positioned according to the auto grid selections.

Thus, it should be appreciated that brainstorming / planning sessions are facilitated by being able to rapidly column snap child cards under parents cards. Uniform vertical spacing between cards in a column is another arrangement feature. Multicolumn header cards allow more related ideas to be grouped within the display constraints. Rapid copy (e.g., control down arrow/shift) rapidly duplicates blank cards of the default size (e.g., parent card for the selected position). These adoptive behaviors keep the tool from dictating the pace of the session by efficiently building and placing cards.

As a graphical user interface, these features adapt a potentially large two-dimensional space to the constraints of a viewing screen. For instance, freeform work is allowed with orphan cards, which may further include other forms of graphic content (e.g., Object Linking and Embedding (OLE)) to capture the knowledge building process. The user may apply multiple annotations (e.g., labels, flags, graphical elements such as black holes and big fish) to each card or OLE object. Interoperability and cooperation is enhanced in a number of ways, such as allowing the format of the data to be exported / imported in a standard office application format (e.g., MICROSOFT WORD, EXCEL). A search query may bridge a number of sessions to find content of interest. Autosave option prevents a session from being inadvertently lost. The multi-column header is another example, as mentioned. Other GUI features include header snap/header snap override; header/subject differentiation; hide/show cards; auto capture of session title and session leader and capture of participants; capture of session data (first saved, last revised, session leader, session title, number of cards); text dependent sizing and/or card autosizing based on amount of text; and creation/importation of templates.

While the present invention has been illustrated by description of several embodiments and while the illustrative embodiments have been described in considerable detail, it is not the intention of the applicant to restrict or in any way limit the scope of the appended claims to such detail. Additional advantages and modifications may readily appear to those skilled in the art.

For instance, in situations where participants are remotely situated, more than one facilitator may be able to modify the virtual board simultaneously or sequentially. Each viewer may thus see the changes being made as they occur. Alternatively, the process may batch accept a number of inputs from various users and perform an auto arrange of the various new cards into a master virtual board. The tracking of session information may include tracking of a participant who submitted each card creation or modification. In order to minimize clutter of the virtual board, this tracking of individual contributions may be made in an associated log file that captures various changes, including those that are later deleted or modified, thus allowing the process of the virtual board displayed thinking to be recreated.

It should be further appreciated that instead of a two dimensional virtual board, some aspects of the virtual board may be depicted as a three dimensional space. For instance, stacked subject cards may be displayed in such a fashion that viewing the virtual board from a perspective view allows seeing each card. In addition, instead of header cards being horizontally positioned, header cards may be vertically distributed with subject cards associated by being in a row.

Although rectangular cards and certain forms of annotations and graphics are illustrated herein, it should be appreciated that cards of various geometric shapes and attributes may be used to further convey information. For instance, the outer shape of the card may be a black hole swirl, a whale, a fish, etc. Importance of a card may be designated by the line weight or overall size given to a certain card, etc.

It should further be appreciated that in some instances, a card may initially be created as a subject card and later be repositioned as a header card, and vice versa. Tools within the application may facilitate such regrouping. For instance, dragging a header card down to the subject space may in some instances cause a subheader card to be created, bringing along any previously associated subject cards.

## Claims

1. A method of representing displayed thinking upon a virtual board within a computer system, comprising:
defining a two dimension space as the virtual board;
defining a linearly aligned header space as a first portion of the virtual board; defining a perpendicularly associated subject space to the header space as a second portion of the virtual board; and
displaying a plurality of cards selectively in the header space and subject space, each card configured to be modifiable to capture nonlinear note taking.

2. The method of claim 1, further comprising:
creating a card for the virtual board;
in response to a user indication of the created card being a header card, placing the created card into the header space; and
in response to a user indication of the created card being a subject card, placing the created card in the subject space.

3. The method of claim 2, further comprising:
determining that a card has been placed in the header space and designating the card as a header card in response thereto; and
determining that a second card has been placed in the subject space substantially perpendicularly aligned with the header card and designating this card as a subject card adopted by the header card.

4. The method of claim 3, further comprising:
determining that a positioned card has been placed in the subject space beyond a threshold for substantial perpendicular alignment with existing header cards and designating this positioned card as an orphan subject card unassociated with existing header cards.

5. The method of claim 3, wherein determining that the second card has been placed in the subject space associated with the header card comprises performing a column snap.

6. The method of claim 5, wherein performing the column snap further comprises:
comparing vertical alignment of the header card and the second card against a threshold; and
performing column snap in response to the second card being within the threshold, and otherwise designating the second card as an orphan card unassociated with the header card.

7. The method of claim 4, further comprising:
designating a header card as controlling a plurality of perpendicularly associated lines of subject card slots; and
associating all adopted subject cards by placement in the plurality of perpendicularly associated lines of subject card slots.

8. The method of claim 1, wherein the virtual board contains a column of cards, the method further comprising:
in response to a user indication to move a designated card, moving associated cards with the designated card.

9. The method of claim 1, further comprising:
inserting a media object onto the virtual board.

10. The method of claim 9, further comprises associating the media object with external content by performing a selected one of a group consisting of linking the media object to networked content and embedding a media content file.
